# EUROPEAN PATENT APPLICATION

(11) **EP 3 783 761 A1**
(43) Date of publication of application: **24.02.2021**
(21) Application number: 20178890.8
(22) Date of filing: 09.06.2020
(51) Int. Cl.: H02G 3/08, H02G 3/12

(54) **JUNCTION BOX**

(30) Priority: 22.08.2019 CZ 201936546 U
(71) Applicant: Kopos Kolín a.s., 28002 Kolín (CZ)
(72) Inventor: Pospí il, Pavel, 28121 ervené Pe ky (CZ); N me ek, Ji í, 28401 Miskovice (CZ); Stan k, Ladislav, 28002 Kolín (CZ)
(74) Representative: Sedlák, Jirí

(57) **Abstract**

Junction box (1), consisting of a box bottom (2) and a housing (3) made of hard plastic. The housing (3) of the box and/or the bottom (2) are provided with openings (4) for cable ducts, which are enclosed by perforable diaphragms (5) made of soft plastic or rubber or perforable diaphragms with detachable parts (14) or breakout covers (16) made of hard plastic. Two opposite sides of the housing (3) are provided with a clamping means on the outer surface to allow the boxes (1) to be joined together into larger units. At the same time, the two opposite sides of the housing (3) are provided from the inside with columns (9) to mount cover caps or internal electrical devices. The side housing (3) of the box (1) is formed by four adjacent surfaces consisting of a pair of opposed cylindrical surfaces (7,7') and a pair of opposed flat surfaces (8, 8') connecting the ends of cylindrical surfaces (7, 7'). The flat surfaces (8, 8') are fitted from the inside in their upper part with a column (9) and at the same time there is one flat surface (8) provided on the outside with a prismatic guide (10). The other flat surface (8') is provided on the outside with a prism (11) complementary to the prismatic guide (10).

## Description

### Field of the Invention

The invention relates to the field of electrical equipment, in particular junction box used in electrical wiring in walls for connecting wires or for housing sockets, switches, circuit breakers and other devices.

### Background of the Invention

Junction boxes are used in several shape variants including round, square or combined shapes, in different sizes and also made of different materials. Everything is subject to the resulting required purpose of use, i.e. the environment in which the box will be used, the capacity it should demonstrate and the size to house wiring material such as terminal blocks or terminals, sockets and circuit breakers. An essential parameter for the design of the box as such is the outer dimension of the box, so that when installing the device (socket, circuit breaker, etc.) it always covers the box safely and when installing multiple devices to keep the spacing of adjacent boxes of 71 mm, thus allowing the installation of additional dimension-standard devices and elements inside and outside the box. Another required parameter is the largest possible inner space of the box to facilitate the installation of wires and devices. The boxes are usually fixed with gypsum in the cavities cut out or milled in the walls. The diameter of the boxes is usually adapted to the mechanical milling of the mounting hole and the depth depends on the size and quantity of the wiring material placed in and the purpose of the installation. Standard masonry drill bits with a circular cross-section have a diameter of 65 mm or 80 mm. To install a group of boxes side-by-side, the boxes on the outside of the housing are provided with connecting elements mostly of a tongue-groove, dovetail or prismatic guide type.

Junction boxes are now almost exclusively made of hard non-conductive plastic, of which the basic body of the box, i.e. the housing and the bottom, is made. To allow the cabling to pass through the bottom or housing, the boxes are provided with holes that are normally covered with either a hard breakout plastic or a flexible diaphragm, or a combination thereof. These hole covers are perforable so that the wire bundle can pass through them in different directions and axes. Boxes are usually provided with elements allowing better and stronger anchoring to the material of the wall in which they are installed, and better and stronger anchoring in gypsum. As a rule, the boxes are provided with holes at the bottom for anchoring by means of screws and there are projections sticking out of the outer sides of the housing to improve the anchoring effect in the gypsum applied. To fasten wiring elements such as terminal blocks, sockets, circuit breakers, etc., and to fix the cover caps, the boxes on the inside of the housing are commonly provided with columns with locking screw holes and/or central projections extending into the box interior from the bottom of the box. For better insulating properties, heat resistance, better chemical resistance, etc., the boxes are provided with additional inner or outer layers of material of appropriate resistance, which are applied to the body of the box, i.e. a layer of hard plastic.

A junction box is known, which is round in shape with an outer diameter of 73.5 mm and an inner diameter of 68 mm. The bottom and housing of the box are made of hard plastic and the box interior is provided with a pair of columns with holes for screws for fastening of electrical devices, terminals, etc., to the box. The openings for cable ducts are sealed with a hard plastic that is perforated to be easily broken out, either whole or in parts, so that the size of the resulting opening is as variable as possible. The disadvantage of this solution is that it is necessary to break out the openings for cable ducts before placing the box in the masonry and at the same time to pull the wiring through the openings. The opening broken out is always larger than the cross-section of the cable, thus creating additional leaks in the box housing, in addition to the perforation holes through which the gypsum flows in, and it is therefore necessary to remove subsequently the gypsum and clean the interior of the box. Since the box is not covered from the top, it must be sealed with a variety of materials, such as paper, before applying plasters to ensure that the plaster or stucco does not enter the box. This is mainly due to the risk of clogging the holes for anchor bolts of electrical devices, terminal boards and terminals. Otherwise, they must be subsequently cleaned from the plaster. Although it is possible to purchase a plastic circular cover cap for each box, this greatly increases the cost of the resulting junction box assembly, since a full circular cap means a relatively large volume of plastic material and the cap will be of no use after installation of the electrical device.

For connection to an adjacent box, two narrow dovetails are formed on opposite outer sides of the box housing. This connection is not very strong and often the boxes are twisted to each other, so that the resulting desired shape of the assembly of boxes and their mutual spacing are not kept. The openings broken out for the cable ducts in adjacent boxes are not accurately connected to each other and are not tight so the passages between the boxes must be sealed by means of pipe fittings, so-called goosenecks.

Another example is an instrument box with an outer dimension of 75 mm and an inner diameter of 67 mm, which is better adapted for joining the boxes together, where the fasteners are two-part tongue fasteners, thus providing a stronger connection but at the expense of smaller interior space. The problem of gypsum leakage into the passages remains for this box. Similar to this box is a box having an inner diameter of 64 mm. It is also possible to purchase a top cover mounting cap to protect the box from contamination when applying plasters.

Also known is a box of square shape with outer dimensions of 71 x 71 mm. The box is designed with sufficient interior space compared to previous box models. The connection to another box is very strong, since besides the connection, the boxes touch each other on a large contact surface. Again, the main disadvantage is the possibility of gypsum flowing into the openings for cable ducts and the screw holes and, moreover, the inability to use a standard circular drill bit to create an installation hole in the wall due to the square shape. In this box, the openings for cable ducts are also recessed in the interior of the box at the point of connection of two boxes, thus not copying the outer plane of the housing and thus creating another cavity for leaking gypsum.

The problem of gypsum leakage at the point of connection of two boxes is solved by the known circular junction box. This box has a cast projection at the point of connection, which is smaller on one outer surface of the box housing and larger on the other. The connection is achieved by inserting the smaller projection of one box into the larger projection of the other box, thereby creating a completely closed tunnel transition between the boxes. The disadvantage is that thanks to this solution the box has an inner diameter of only 60 mm, i.e. stronger connection of adjacent boxes and elimination of gypsum leakage is at the expense of the interior installation space.

The purpose of the present invention is to design a universal junction box with maximum interior space for the installation of electrical equipment, with the box adapted for interconnection into larger units, eliminating gypsum leakage and maximizing the strength of the box connection. The depth of the box should be modifiable in production. The openings for cable ducts should be covered with a perforable soft rubber that adheres to the conductor after the perforation and forms a waterproof sleeve around it. The aim is also to make maximum use of the standard space created in the wall with a standard drill bit with a circular cross-section and to fill this opening to a maximum extent so that the junction box can be fixed by gypsum without the risk of leakage of this material into the installed box and at the same time to minimize the risk of clogging the holes for anchor bolts of internal electrical installations during finishing masonry, stucco or painting work while maintaining sufficient strength of the box mounting in the opening to ensure proper functioning of the installed device.

### Summary of the Invention

The deficiencies of the known technical solutions are solved by the proposed junction box, whose shape allows maximum utilization of the opening made in the wall by means of a standard drill bit with a circular cross-section. The box will be fixed in the cavity with gypsum without the risk of gypsum flowing into the interior of the box, the projections on the outer surface of the box will ensure sufficient strength of the box anchoring. The box interior provides enough space for easy placement of electrical equipment and cable ducts, and the prismatic means of joining the boxes into larger box assemblies create a strong and durable connection ensuring sufficient strength of the position and shape of the connection and the boxes. The blanking strip then eliminates the possibility of clogging the recessed holes and/or screw heads with mortar during finishing masonry work.

The junction box consists of the bottom of the box and the housing of the box, which form a single, homogeneous, non-demountable unit made by molding of hard plastic. In order to pass through the cable ducts, the housing and the bottom of the box are provided with openings. These openings are covered by a perforable soft plastic or rubber diaphragm or a soft plastic or rubber diaphragm with detachable parts. Instead of soft plastic or rubber, the openings can be closed with breakout covers made of hard plastic, where the transition between the box and the cover is perforated so that subsequent breaking-out and removal of the cover is easier and physically undemanding. At least two opposing sides of the box are provided with a clamping means on the outer surface to allow the boxes to be joined together into larger units. At least two opposite sides of the housing are provided with columns from inside to mount cover caps or electrical devices. In the present invention, the side panel of the box is formed by four adjacent surfaces joined together in a single unit. The housing is formed by two opposed cylindrical surfaces joined together by a pair of opposite flat surfaces interconnecting the ends of the cylindrical surfaces. The flat surfaces are always fitted from the inside in their upper part with a column with recessed holes for anchoring devices, caps and other accessories. Anchoring is carried out using clamping screws. At the same time, the flat surfaces from the outside are provided with clamping means at their ends allowing a prismatic connection of two adjacent boxes so that a prismatic guide is formed on one side of the box and a prism is formed on the other side, wherein both parts of the clamping means are complementary to each other.

In a preferred embodiment, the outer width of the box of the present invention is from 60 mm to 78 mm. The outer length of the box also reaches dimensions ranging from 60 mm to 78 mm and the outer length of the flat surfaces ranges from 13 mm to 40 mm. The outer radius of curvature of the cylindrical surfaces of the present invention reaches the range of dimensions from 30 mm to 45 mm and the depth of the box ranges from 30 mm to 70 mm.

In another preferred embodiment, the outer width of the box is 73 mm, the outer length of the box is 73 mm, the outer length of the flat surfaces is m=37 mm, and the outer radius of curvature of the cylindrical surfaces is 36 mm. The present invention provides the best spatial conditions to maximize the interior space of the box while maximizing the use of a wall opening with a diameter of 80 mm.

In another preferred embodiment, the outer depth of the box is 45 mm for standard box depth and 70 mm for deep box design.

In the following preferred embodiment, the bottom of the box is provided with at least one mounting hole covered with a perforable diaphragm made of soft plastic or rubber or a breakout cover made of hard plastic. The hole is intended for fixing the box in the wall using additional anchor bolts. Thanks to this anchoring, the box can be placed in the wall without the need for immediate plastering, thus separating electrical work from masonry work. The soft diaphragm can be easily ruptured by metal screw, but at the same time it encircles the screw and seals the gap between the box and the screw.

In another preferred embodiment, the columns for anchoring the internal wiring elements are provided with at least one recessed screw hole. The top edge of the column is at the same height as the top edge of the box and the column has a length ranging from 5 mm to 25 mm, but the top edge of the recessed hole is advanced 1 mm to 4 mm from the top edge of the box housing. The resulting lowering of the column profile at the top of the box ensures trouble-free placement of the clamping screws into the recessed holes and the application of a blanking strip, which partially fulfils the cap function, before finishing masonry work, without these elements protruding above the top profile of the box with any of its parts, thus preventing the masonry work from being carried out conveniently and the plaster from being flat. The blanking strip does not cover the entire top profile of the box, but only the important parts whose clogging would result in more complex cleaning work. This construction using less material is more cost-effective than using complete caps, both of which are finally discarded and serve only as an assembly fixture. The purpose of the blanking strip is also the possibility of external information description of the box, e.g. for marking individual circuits.

In another preferred embodiment, the length of the column is 20 mm and the top edge of the recessed hole is advanced 3 mm lower than the top edge of the box housing.

In another preferred embodiment, the recessed holes are directly provided with clamping screws to avoid the problem with their absence during subsequent assembly.

In the following preferred embodiment, the openings for cable ducts follow the plane of the outer wall of the box, even at the place of the columns. The present invention increases the internal installation space of the box compared to conventional embodiments when the inner profile of the box is maintained. In the present invention, one opening for cable duct is always located in one vertical axis with the column in the space between the lower end of the column and the bottom of the box, on each one flat surface forming part of the housing of the junction box. These openings create a direct interconnection of individual boxes when connecting several boxes into compact units, when these interconnections follow the outer part of the box housing, so that two adjacent boxes are always hermetically sealed between each other at the point of joining the openings and there is no risk of gypsum leaking into the box during subsequent plastering in the wall.

In another preferred embodiment, each of the four surfaces of the box housing is provided with at least one opening for cable duct and the bottom of the box is provided with at least one opening. The openings are of various sizes and allow practical routing of wiring in all directions except outside the box, where there is always a cap or an electrical device. The diaphragms covering the openings comprise one or more central detachable parts forming a set of removable concentric circles. In this way, it is possible to seal the inlets when using different types of cables or tubes.

In another preferred embodiment, the box is provided with anchoring projections in the shape of a triangular prism on its outer surface, with one protruding flat surface always pointing upwards. These projections thus create an additional anchor holding the box in solidified gypsum and prevent it from extending out of the housing.

In the following preferred embodiment, the prismatic guide is formed by a pair of shaped prismatic projections that are made outside as an extension of the connection of the cylindrical surface and the flat surface over the entire length of the joint. The projections extend above both ends of the flat surface on one side of the box and the complementary prism is made as a full-surface projection, with side edges of a prismatic shape, on the outside of the opposite flat surface. Due to this configuration, the subsequent joining of the pair of boxes is secured by contact over the entire area of the flat surfaces, whereby a very strong and compact joint not subject to shape instability is achieved.

The main advantage of the invention is the combination of retaining the possibility of using a standard drill bit with a circular cross-section for creating openings for boxes with maximum utilization of the openings for location of the box. Thus, the box fills the formed opening as much as possible while maintaining the plane of the outer profile of the box while pressing it, increasing the usable interior space of the box so much needed for convenient installation of electrical cable ducts and electrical devices such as sockets, circuit breakers, terminal boards and others into the box. Following the outer profile in combination with the selected materials and locating the openings ensure subsequently that the joint of the two boxes is sufficiently strong and stable in shape and that the gypsum does not leak into the box through leaks in the housing or bottom.

### Explanation of drawings

The invention will be explained in detail by drawings which illustrate:
- Fig. 1: a left top perspective view of a box of a low box embodiment with openings covered by a flexible diaphragm;
- Fig. 2: a right top perspective view of a box of a low box embodiment with openings covered by a flexible diaphragm;
- Fig. 3: a plan view of a box of a low box embodiment with openings covered by a flexible diaphragm;
- Fig. 4: a left top perspective view of a box of a low box embodiment with openings covered by a flexible diaphragm with a blanking strip;
- Fig. 5: a left top perspective view of a box of a low box embodiment with openings covered by breakout covers of a circular shape;
- Fig. 6: a left top perspective view of a box of a low box embodiment with openings covered by breakout covers of a semicircular shape;
- Fig. 7: a left top perspective view of a box of a high box embodiment with openings covered by a flexible diaphragm.

### Examples of the invention embodiments

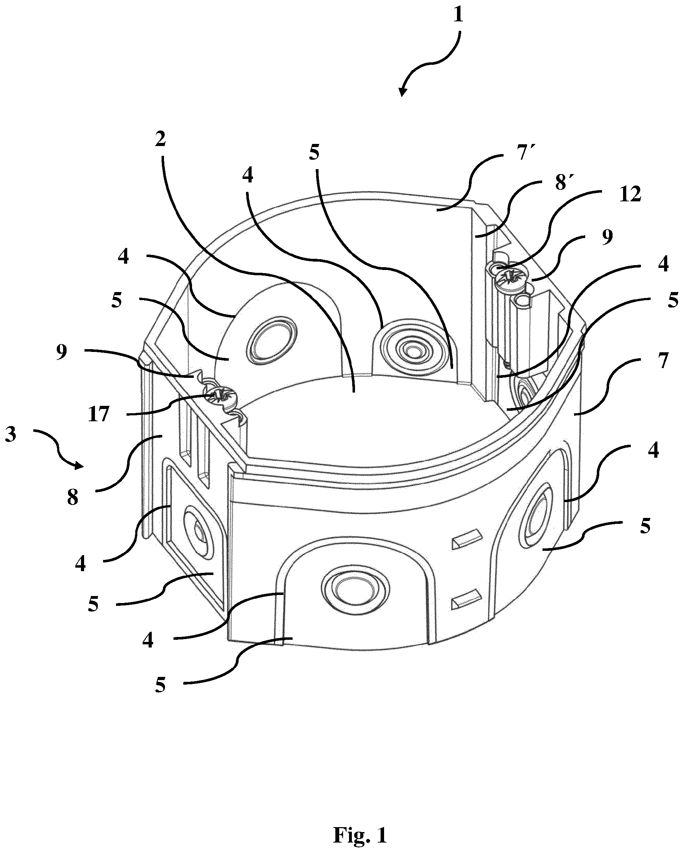

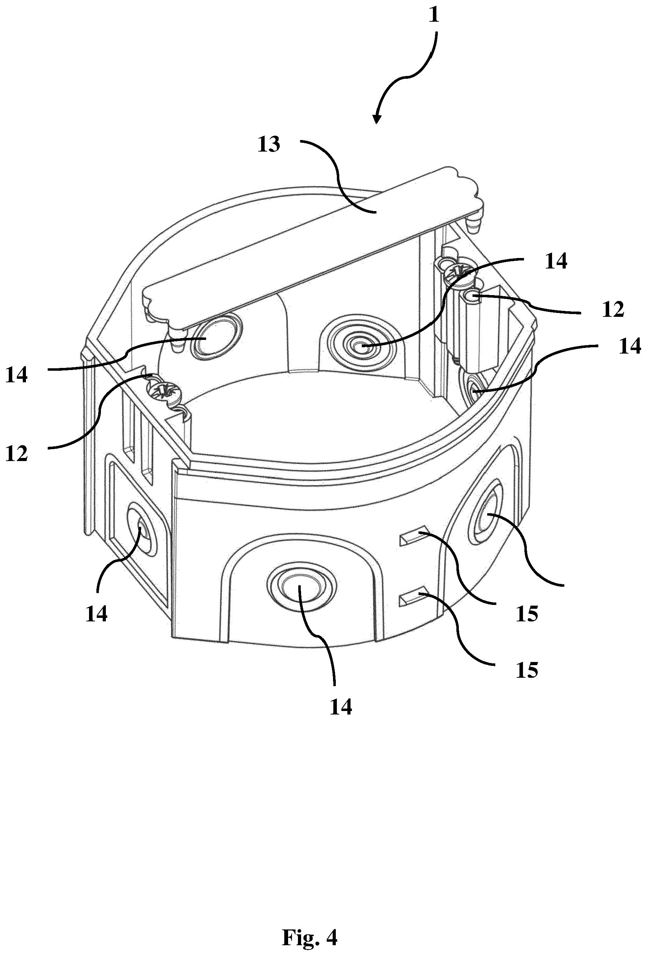

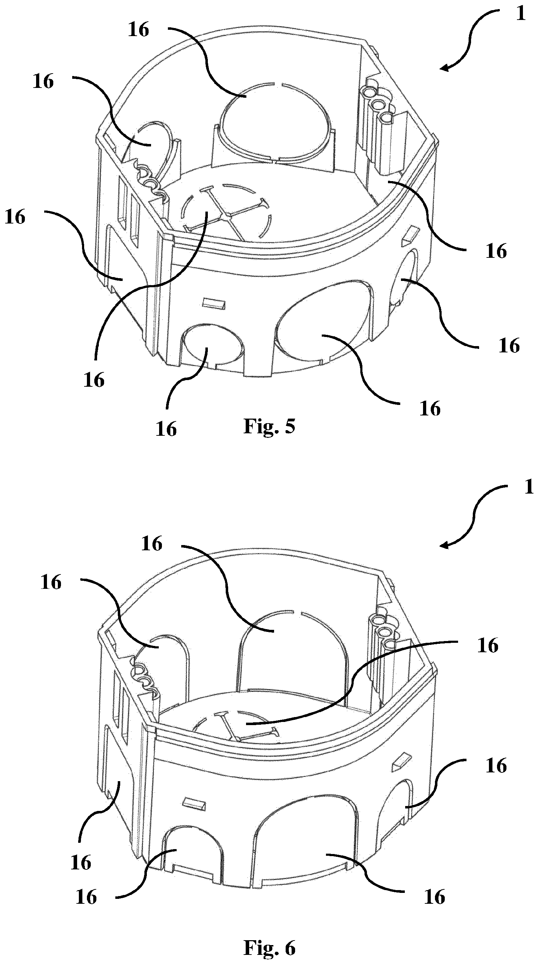

As illustrated in Fig. 1, the junction box **1** consists of the bottom **2** of the box **1** and the housing **3** of the box **1**, which form a single, homogeneous, non-demountable unit made by molding of hard plastic. To enable the implementation of the cable duct, the housing **3** and the bottom **2** of the box **1** are provided with openings **4** for cable ducts. These openings **4** are, as shown in Figs. 1, 3 and 4, covered by a perforable diaphragm **5** made of soft plastic or rubber, which can be provided with detachable parts **14.** This embodiment provides for sealing of the passage resulting from the removal of the detachable part **14,** or at the point where the cable penetrates through the diaphragm **5**, thereby preventing the gypsum, which is used for fixing the boxes **1** in the wall, from entering the interior of the box **1.** Instead of diaphragm **5**, the openings **4** as shown in Figs. 5 and 6 can be closed with breakout covers **16** made of hard plastic, where the transition between the box **1** and the cover **16** is perforated so that subsequent breaking-out and removal of the cover **16** is easier and physically undemanding.

As shown in Figs. 1, 2 and 3, at least two opposite sides of the housing **3** of the box **1** are provided with a clamping means on the outer surface to allow the boxes **1** to be joined together into larger units. At least two opposing sides of the housing **3** are provided with columns **9** from inside to mount cover caps or electrical devices. In the present invention, the side panel of the housing **3** of the box **2** is formed by four adjacent surfaces joined together in a single unit. The housing **3** is formed by two opposed cylindrical surfaces **7, 7'** joined together by a pair of opposite flat surfaces **8**, **8'** interconnecting the ends of the cylindrical surfaces **7, 7'**. The flat surfaces **8, 8'** are always fitted from the inside in their upper part with a column **9** with recessed holes **12** for anchoring internal wiring elements and covers in the box **1.** Anchoring is carried out using clamping screws **17.** At the same time, the flat surfaces **8, 8'** from the outside are provided with clamping means at their ends allowing a prismatic connection of two adjacent boxes **1** so that a prismatic guide **10** is formed on one flat surface **8** of the box **1** and a prism **11** is formed on the other flat surface **8'** of the box **1,** wherein both parts of the clamping means are complementary to each other.

The production of the box **1** is carried out by moulding the plastics in a mould in one or two phases, when in the first phase the supporting frame of the box **1** made of hard plastic is formed without covers **16** or with covers **16** and in the second phase a flexible plastic or rubber compound is applied to the openings **4** in the housing **3** and the bottom **2** in the variant without covers **16** to seal the unblinded openings **4.** The connection of the two layers is so precise that there is no direct transition visible between the layers than the material transition and there is no direct unwanted separation of the two layers.

The box **1** of the present invention reaches the following range of individual dimensions: the outer width **š** of the box **1** is from 60 mm to 78 mm; the outer length **d** of the box **1** is from 60 mm to 78 mm and the outer length **m** of the flat surfaces **8, 8'** is from 13 mm to 40 mm. The outer radius of curvature **r** of the cylindrical surfaces **7, 7'** of the present invention is in the range from 30 mm to 45 mm and the depth **h** of the box **1** ranges from 30 mm to 70 mm.

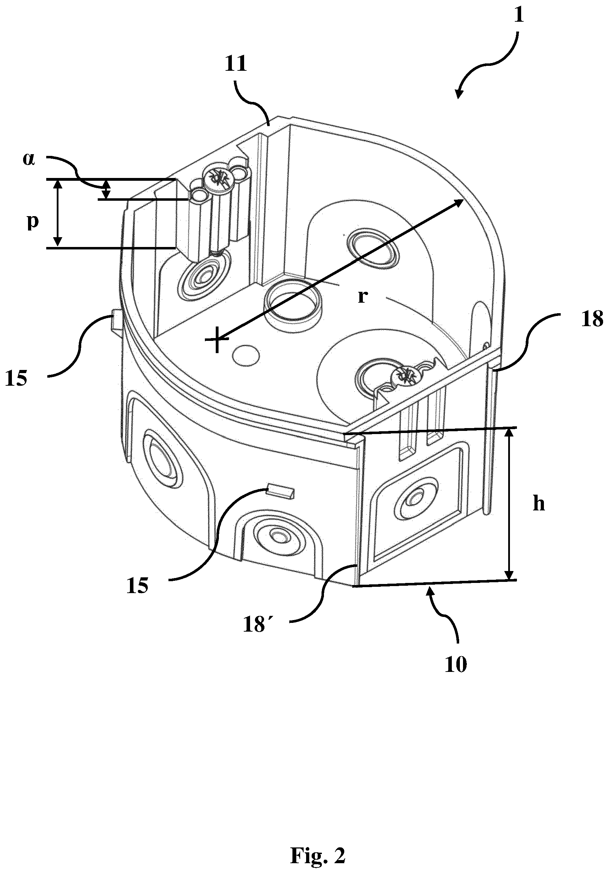

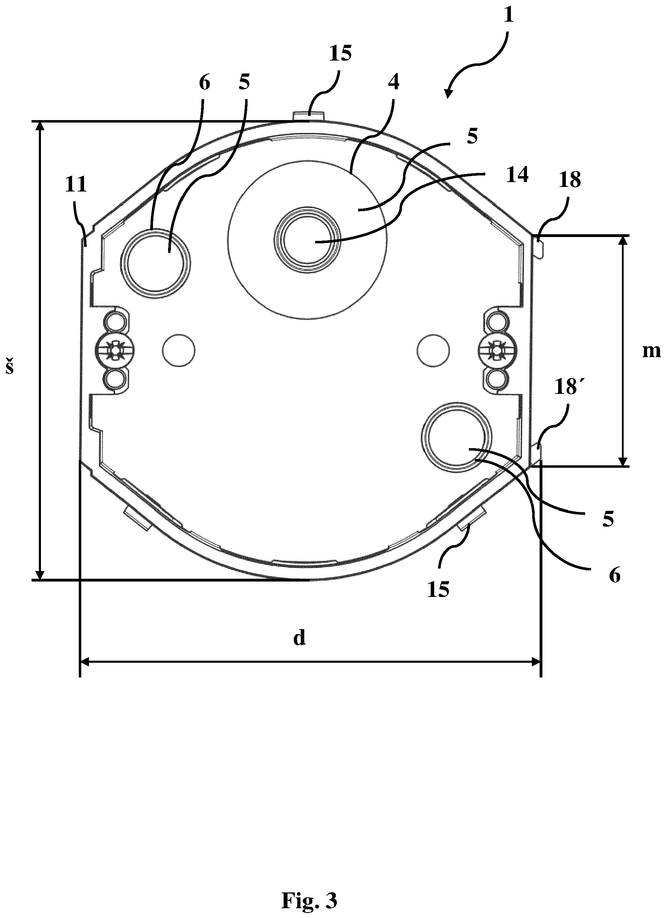

Optimally, the dimensions of the box as shown in Figs. 2 and 3 are: the outer width **š** of the box **1** is 73 mm, the outer length **d** of the box **1** is 73 mm, the outer length **m** of flat surfaces **8, 8'** is 37 mm, the outer radius **r** of curvature of cylindrical surfaces **7**, **7'** is 36 mm. The present invention provides the best spatial conditions to maximize the interior space of the box **1** while maximizing the use of a wall opening with a diameter of 80 mm.

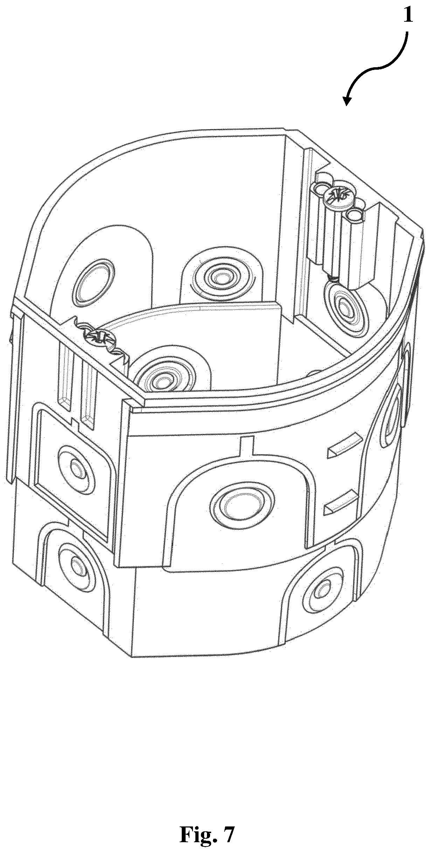

The box 1 is produced in two basic depth variants for various interior space requirements. The box 1 in the classic "shallow" design has a depth h 45 mm and the box in the deep design has a depth h 70 mm. As shown in Fig. 7, the variant of the deep box 1 is visually composed of two boxes 1, wherein the lower box 1 is visually integrated in the upper box 1. Technologically, however, it is a monolithic junction box 1.

In the present invention, the bottom of the box 1 is provided with at least one mounting hole 6 covered with a perforable diaphragm 5 made of soft plastic or rubber or a breakout cover 16 made of hard plastic. The mounting hole **6** is intended for fixing the box **1** in the wall using additional anchor bolts. Thanks to this anchoring, the box **1** can be placed in the wall without the need for immediate plastering, thus reliably separating electrical work from masonry work. The soft diaphragm **5** can be easily ruptured by metal screw, but at the same time it encircles the screw and seals the gap between the box **1** and the screw.

The columns **9** for anchoring the internal wiring elements are provided with at least one recessed hole **12** for the screw **17** according to the present invention. The upper edge of the column **9** is at the same height as the upper edge of the box **1** and the column **9** has a length **p** ranging from 5 mm to 25 mm, when the optimal length is 20 mm. The upper edge of the recessed hole **12** is advanced by a length **α** ranging from 1 mm to 4 mm, when the optimal offset is 3 mm from the upper edge of the housing **3** of the box **1.** The resulting reduction in the profile of the column **9** at the top of the box **1** ensures a problem-free positioning of the clamping screws **17** in the recessed holes **12.** It also allows the application of a blanking strip **13**, which here partially fulfils the function of the cap, before the commencement of finishing masonry work. The blanking strip **13** is anchored to the recessed hole **12** by means of its projection, pin or clamping screw **17,** while neither the strip **13** nor the clamping screw **17** extends above the top profile of the box **1** in any way, thereby not hindering convenient masonry work while keeping flatness of plasters. The blanking strip **13** does not cover the entire top profile of the box **1,** but only the important parts whose clogging would result in more complex cleaning work. This technical solution uses less material so it is more cost-effective than using complete caps, both of which are finally discarded and serve only as an assembly fixture.

The present invention allows at least one recessed hole **12** to be directly provided with a clamping screw **17**, so that when assembled, it is no longer necessary to carry the screws **17** separately from the boxes **1** and consequently there is no risk of losing them.

As shown in Figs. 1 to 4, the openings **4** for the wiring of the junction box **1** follow the plane of the outer wall of the box **1**, even at the location of the columns **9.** The present invention thus increases the inner installation space of the box **1** compared to conventional embodiments. Conventional junction boxes **1** usually retain the internal profile of the box **1**. In the present invention, one opening **4** for cable duct is always located in one vertical axis with the column **9** in the space between the lower end of the column **9** and the bottom **2** of the box **1**, on each one flat surface **8, 8'** forming part of the housing **3** of the junction box **1.** These openings **4** create a direct interconnection of individual boxes **1** when connecting several boxes **1** into compact units, when these interconnections follow the outer part of the housing **3** of the box **1**, so that two adjacent boxes **1** are always hermetically sealed between each other at the point of joining the openings **4** and there is no risk of gypsum leaking into the box **1** during subsequent plastering in the wall.

According to the present invention, each of the four surfaces **7, 7', 8**, **8'** of the housing **3** of the box **1** is provided with at least one opening **4** for cable duct and the bottom **2** of the box **1** is provided with at least one opening **4.** The openings **4** are of various sizes and allow practical routing of wiring to all sides recessed in the wall. The diaphragms 5 covering the openings **4** comprise one or more central detachable parts **14** forming a set of removable concentric circles. In this way, it is possible to achieve full tightness of the cable jacket - diaphragm **5** joint for all common cable line production widths.

As shown in Figs. 2, 3 and 4, the box **1** is provided on its outer housing **2** with anchoring projections **15** in the form of a triangular prism. One protruding side of the triangular prism is always pointing upwards. These projections **15** create an additional anchor holding the box **1** in solidified gypsum and prevent it from extending out of the housing.

The prism guide **10** according to the present invention is formed, as shown in Figs. 2 and 3, by a pair of shaped prismatic projections **18**, 1**8'**, which are made outside as an extension of the connection of the cylindrical surface **7**, **7'** and the flat surface **8**, **8'** over the entire length of the joint. The projections **18, 18'** extend above both ends of the flat surface **8** on one side of the box **1** and the complementary prism **11** is made as a full-surface projection, with side edges **18, 18'** of a prismatic shape, on the outside of the opposite flat surface **8'.** Due to this configuration, the subsequent joining of the pair of boxes **1** is secured by contact over the entire area of the flat surfaces **8, 8',** whereby a very strong and compact joint not subject to shape instability is achieved.

### Industrial applicability

The invention may be used in the field of power engineering in the creation of electrical installations, in particular junction box used in electrical wiring in building walls for connecting wires or for housing sockets, switches, circuit breakers and other devices.

### List of index reference numerals

- 1: junction box
- 2: bottom of the junction box
- 3: housing of the junction box
- 4: opening for cable duct
- 5: diaphragm
- 6: mounting hole
- 7: cylindrical surface of the box housing
- 7': cylindrical surface of the box housing
- 8: flat surface of the box housing
- 8': flat surface of the box housing
- 9: column for anchoring of internal wiring elements
- 10: prismatic guide
- 11: prism
- 12: recessed screw hole
- 13: blanking strip
- 14: detachable central part of the diaphragm
- 15: anchoring projection
- 16: breakout cover
- 17: clamping screw
- 18: projection of the prismatic guide
- 18': projection of the prismatic guide
- š: outer width of the box
- d: outer length of the box
- m: length of flat surfaces of the housing
- r: radius of curvature of cylindrical surfaces
- h: depth of the box
- p: length of the column
- α: offset of the beginning of the recessed hole from the upper edge of the column

## Claims

1. The junction box (1), consisting of the bottom (2) of the box and the housing (3) made of hard plastic, where the housing (3) and/or the bottom (2) are provided with openings (4) for cable ducts, which are enclosed by perforable diaphragms (5) made of soft plastic or rubber or perforable diaphragms with detachable parts (14) or breakout covers (16) made of hard plastic, where at least two opposite sides of the housing (3) are provided with a clamping means on the outer surface to allow the boxes (1) to be joined together into larger units, and where at least two opposite sides of the housing (3) are provided from inside with columns (9) to mount cover caps or internal electrical devices, **characterized in that** the side housing (3) of the box (1) is formed by four adjacent surfaces consisting of a pair of opposed cylindrical surfaces (7,7') and a pair of opposed flat surfaces (8, 8') connecting the ends of cylindrical surfaces (7, 7'), where the flat surfaces (8, 8') are fitted from the inside in their upper part with a column (9) and at the same time there is one flat surface (8) provided on the outside with a prismatic guide (10) and the other flat surface (8') is provided on the outside with a prism (11) complementary to the prismatic guide (10).

2. The junction box according to claim 1, **characterized in that** the outer width (š) of the box (1) is from 60 mm to 78 mm, the outer length (d) of the box (1) is from 60 mm to 78 mm, the outer length (m) of flat surfaces (8, 8') is from 13 mm to 40 mm, the outer radius (r) of curvature of cylindrical surfaces (7, 7') is from 30 mm to 45 mm, and the depth (h) of the box (1) ranges from 30 mm to 70 mm.

3. The junction box according to claims 1 and 2, **characterized in that** the outer width (š) of the box (1) is 73 mm, the outer length (d) of the box (1) is 73 mm, the outer length (m) of flat surfaces (8, 8') is 37 mm, the outer radius (r) of the curvature of cylindrical surfaces (7, 7') is 36 mm.

4. The junction box according to claims 1 through 3, **characterized in that** the outer depth (h) of the box (1) is 45 mm.

5. The junction box according to claims 1 through 3, **characterized in that** the outer depth (h) of the box (1) is 70 mm.

6. The junction box according to claim 1, **characterized in that** the bottom (2) of the box (1) is provided with at least one mounting opening (6) covered by a perforable diaphragm (5) made of soft plastic or rubber or a breakout cover (16) made of hard plastic to attach the box (1) to the support by means of anchor bolts.

7. The junction box according to claim 1, **characterized in that** the columns (9) are provided with at least one recessed screw hole (12), where the upper edge of the column (9) is at the same height as the upper edge of the box (1) and the column (9) has a length (p) from 5 mm to 25 mm, where the upper edge of the recessed hole (12) is advanced by a length (α) in the range from 1 mm to 4 mm from the upper edge of the box (1).

8. The junction box according to claims 1 and 7, **characterized in that** the column (9) has a length (p) of 20 mm and the upper edge of the recessed hole (12) is advanced by a length (α) of 3 mm.

9. The junction box according to claims 1, 7 and 8, **characterized in that** it is provided with a blanking strip (13) which is fastened to the upper edge of the recessed hole (12).

10. The junction box according to claims 1, 7, 8 and 9, **characterized in that** the recessed holes (12) are fitted with clamping screws (17).

11. The junction box according to claims 1, 7 and 8, **characterized in that** the openings (4) for the wiring of the junction box (1) follow the plane of the outer wall of the box (1), even at the location of the columns (9), where one opening (4) is always located in one vertical axis with the column (9) in the space between the lower end of the column (9) and the bottom (2) of the box (1) on each flat surface (8, 8') of the housing (3) of the box (1) for establishing a direct passage between adjacent boxes (3) in case of interconnection.

12. The junction box according to claims 1, 7, 8 and 11, **characterized in that** each of the four surfaces of the housing (3) of the box (1) is provided with at least one opening (4) for cable duct and the bottom (2) of the box (1) is provided with at least one opening (4).

13. The junction box according to claim 1, **characterized in that** the box (1) is provided on its outer housing (3) with anchoring projections (15) in the form of a triangular prism, with one protruding flat surface always pointing upwards to form a barrier to prevent the box (1) from extending out of the masonry material.

14. The junction box according to claim 1, **characterized in that** the prismatic guide (10) is formed by a pair of shaped prismatic projections (18, 18') formed outside of the connection of the cylindrical surface (7, 7') and the flat surface (8, 8') over the entire length of this joint and extending above both ends of the flat surface (8) on one side of the box (1) and prism (11) is made as a full-surface projection, with side edges of prismatic shape, extending above the second flat surface (8'), which is complementary to the prismatic guide (10).
